# EUROPÄISCHE PATENTANMELDUNG

(11) **EP 3 778 357 A1**
(43) Veröffentlichungstag der Anmeldung: **17.02.2021**
(21) Anmeldenummer: 20020322.2
(22) Anmeldetag: 13.07.2020
(51) Int. Cl.: B62D 33/04

(54) **ANORDNUNG, FAHRZEUG MIT EINER ANORDNUNG UND HERSTELLUNGSVERFAHREN**

(30) Priorität: 13.08.2019 DE 102019005780; 25.10.2019 DE 102019007575
(71) Anmelder: Gosch, Claus, 21279 Wenzendorf (DE); Fürstenberg, Malte, 20539 Hamburg (DE)
(72) Erfinder: Gosch, Claus, 21279 Wenzendorf (DE); Fürstenberg, Malte, 20539 Hamburg (DE)

(57) **Zusammenfassung**

Anordnung (1) mit einem ersten aufblasbaren und/oder evakuierbaren Flächenvolumenelement (2a) und einem ersten länglichen Stützprofil (4a). Das Stützprofil (4a) umfasst an einer ersten Seite (6a) eine erste Aufnahme (8a).Das erste aufblasbare und/oder evakuierbare Flächenvolumenelement (2a) ist dabei derart mit dem ersten Stützprofil (4a) gekoppelt, dass die erste Aufnahme (8a) eine erste Seite (10a) des ersten Flächenvolumenelementes (2a) außenumfangsseitig zumindest teilweise umgibt.

## Beschreibung

Die Erfindung betrifft eine Anordnung mit einem ersten aufblasbaren und/oder evakuierbaren Flächenvolumenelement, ein Fahrzeug mit und ein Herstellungsverfahren einer solchen Anordnung.

Die DE102016015642 offenbart eine Transportbox aus einem aufblasbaren Drop-Stitch Material. Dabei sind die zwei Seitenwände, die Rückwand und der Boden der Transportbox aus einem Stück Drop-Stitch-Panel gefertigt. Eine Vorderseite und eine Decke der Transportbox sind aufrollbar, wobei die Decke mit Reißverschlüssen an den Seitenwänden befestigt werden kann.

Die WO 2016/145239 offenbart eine Kühlbox, die zumindest teilweise aus einem Drop-Stitch Material hergestellt ist.

Die Aufgabe, die der Erfindung zugrunde liegt, ist es, eine möglichst leichte und dabei flexibel und gleichzeitig modulare Anordnung vorzuschlagen.

Die Aufgabe wird gelöst durch die Merkmale der unabhängigen Patentansprüche. Vorteilhafte Ausgestaltungen der Erfindung sind in den Unteransprüchen angegeben.

Die Erfindung zeichnet sich gemäß einem ersten Aspekt aus durch eine Anordnung mit einem ersten aufblasbaren und/oder evakuierbaren Flächenvolumenelement und einem ersten länglichen Stützprofil. Das erste Stützprofil umfasst an einer ersten Seite eine erste Aufnahme. Dabei ist das erste aufblasbare und/oder evakuierbare Flächenvolumenelement derart mit dem ersten Stützprofil gekoppelt, dass die erste Aufnahme eine erste Seite des ersten Flächenvolumenelementes außenumfangsseitig zumindest teilweise umgibt.

Unter dem Begriff Flächenvolumenelement ist ein Volumenelement zu verstehen, welches zumindest teilweise aufblasbar ist, so z.B. mit Luft, um seinen Nutzungszustand einzunehmen. Gleichzeitig weist es eine Länge und eine Breite auf, die jeweils größer ist als eine Dicke des Elementes. Das Flächenvolumenelement bildet somit ein plattenförmiges Element. Um einen erschlafften Zustand einzunehmen, ist der aufgeblasene Anteil des Volumenelementes zu entlüften. Darüber hinaus kann das Flächenvolumenelement auch teilweise evakuierbar sein, um durch die Beaufschlagung mit einem Unterdruck seinen Nutzungszustand einzunehmen. Um einen erschlafften Zustand einzunehmen, ist der evakuierte Anteil des Volumenelementes zu belüften. Natürlich kann das Flächenvolumenelement auch entweder aufblasbar oder evakuierbar sein, um den Nutzungszustand einzunehmen.

Die Verwendung des Stützprofils hat den Vorteil, dass das Stützprofil eine einheitliche Schnittstelle in Form der Aufnahme für die Kopplung mit dem Flächenvolumenelement bietet. D.h. das Stützprofil als solches stellt die Aufnahme bereit, während unterschiedliche in Länge und Breite, aber gleicher Dicke ausgebildete Flächenvolumenelemente damit gekoppelt werden können. Typischerweise ist die Aufnahme ein integraler Bestandteil des Stützprofils. Ferner ist das Stützprofil in der Regel länglich ausgebildet, d.h. eine Länge des Stützprofils ist größer als jeweils eine Breite und eine Tiefe. Die Aufnahme erstreckt sich vorzugsweise in Längsrichtung des Stützprofils. Dadurch ist das Stützprofil ausgebildet, das jeweilige Flächenvolumenelement an der ersten Seite zumindest teilweise zu stützen. Alternativ kann die Aufnahme auch so ausgebildet sein, dass sie die erste Seite des Flächenvolumenelements nur zum Teil in Längsrichtung außenumfangsseitig zumindest teilweise umgibt. Das Profil der ersten Aufnahme des Stützprofils ist in einem Querschnitt beispielsweise U- oder C-förmig ausgebildet. Dadurch kann das Flächenvolumenelement mittels der ersten Seite in einen offenen Bereich des Profils eingeschoben werden. Dabei umgreift die Aufnahme das Flächenvolumenelement an der ersten Seite außenumfangsseitig zumindest teilweise, so dass eine Stützung des Flächenvolumenelementes gegeben ist. Mittels eines Stützprofiles können auch mehrere Flächenvolumenelemente mittels der ersten Aufnahme gestützt werden. Die einzelnen mit dem einen Stützprofil gekoppelten Flächenvolumenelemente können sich jeweils in Länge und Breite unterscheiden, weisen aber typischerweise eine identische Dicke auf, die mit einer Profilweite der ersten Aufnahme des Stützprofils korrespondiert.

In einer vorteilhaften Ausgestaltung des ersten Aspekts umfasst die Anordnung ein zweites aufblasbares und/oder evakuierbares Flächenvolumenelement. Das erste Stützprofil weist an einer zweiten Seite eine zweite Aufnahme auf. Dabei ist das zweite aufblasbare und/oder evakuierbare Flächenvolumenelement derart mit dem ersten Stützprofil gekoppelt, dass die zweite Aufnahme eine erste Seite des zweiten Flächenvolumenelementes außenumfangsseitig zumindest teilweise umgibt.

Die zweite Aufnahme kann identisch zu der ersten Aufnahme ausgebildet sein, befindet sich aber auf einer anderen Seite des Stützprofils. Die zweite Aufnahme ist typischerweise integraler Bestandteil des Stützprofils. Grundsätzlich können sich die beiden Aufnahmen aber auch in ihrem Profil unterscheiden, so z.B. um auf der ersten Seite ein Flächenvolumenelement einer ersten Dicke und um auf der zweiten Seite ein Flächenvolumenelement einer anderen, zweiten Dicke zu stützen. Auch kann sich das Querschnittsprofil der ersten Aufnahme von der zweiten unterscheiden, ist aber weiterhin so ausgeführt, dass ein jeweiliges Flächenvolumenelement gestützt werden kann. Dabei können die erste und zweite Aufnahme derart an dem Stützprofil angeordnet sein, dass zumindest zwei damit gekoppelte Flächenvolumenelemente in einer Ebene verlaufen. Dabei kann das Stützprofil beispielsweise einen H-förmigen Querschnitt aufweisen. Die erste und zweite Aufnahme können aber auch derart an dem Stützprofil angeordnet sein, dass beide mit dem Stützprofil gekoppelten Flächenvolumenelemente in einer Draufsicht einen vorgegebenen Winkel, so z.B. 60° oder 90°, aufspannen.

In einer weiteren vorteilhaften Ausgestaltung des ersten Aspekts weist die Anordnung ein zweites längliches Stützprofil auf. Dabei ist das erste Stützprofil mit der ersten Seite des ersten Flächenvolumenelementes und das zweite Stützprofil mit einer zweiten Seite des ersten Flächenvolumenelementes gekoppelt. Dabei kann das erste Flächenvolumenelement mit der ersten Aufnahme des ersten Stützprofils und gleichzeitig mit der ersten Aufnahme des zweiten Stützprofils derart jeweils gekoppelt sein, dass das jeweilige Stützprofil die jeweils zugeordnete Seite des ersten Flächenvolumenelementes außenumfangsseitig zumindest teilweise umgibt. Eine derartige Anordnung stützt also das erste Flächenvolumenelement gleichzeitig mittels des ersten und zweiten Stützprofils.

In einer weiteren vorteilhaften Ausgestaltung des ersten Aspekts ist das jeweilige Flächenvolumenelement mit der entsprechenden Seite in die entsprechende Aufnahme des Stützprofils werkzeuglos gesteckt. Dadurch kann möglichst einfach eine Anordnung erstellt werden, ohne das ein Werkzeug zum Ineinanderstecken des jeweiligen Flächenvolumenelementes in das jeweilige Stützprofil erforderlich ist. In der Regel kann durch das Zusammenstecken des jeweiligen Flächenvolumenelementes in die entsprechende Aufnahme des jeweiligen Stützprofils bereits eine ausreichende Stützung des Flächenvolumenelementes ermöglicht werden.

In einer weiteren vorteilhaften Ausgestaltung des ersten Aspekts erfolgt eine Fixierung des oder der Flächenvolumenelemente an das zumindest eine Stützprofil mittels eines spannbaren Befestigungselementes. Nach dem Stecken des jeweiligen Flächenvolumenelementes in die jeweilige Aufnahme des Stützprofils kann also zusätzlich das spannbare Befestigungselement genutzt werden, um das Flächenvolumenelement und das Stützprofil sicher miteinander zu fixieren. Dabei kann das spannbare Befestigungselement z.B. als Spanngurt, Kette, Flaschenzug, Seil, Gewindestange, Hakenschraube, etc. ausgebildet sein. Vorzugsweise ist das spannbare Befestigungselement derart ausgebildet, dass es werkzeuglos spannbar und/oder entspannbar ist. Die Fixierung mittels des spannbaren Befestigungselementes dient typischerweise weniger der Stützung des Flächenvolumenelementes als vielmehr der Sicherstellung, dass das jeweilige Flächenvolumenelement in der Aufnahme des jeweiligen Stützprofils verbleibt. Ist das jeweilige Flächenvolumenelement beispielsweise zwischen zwei Stützprofilen angeordnet, so kann die Fixierung auch derart erfolgen, dass zumindest ein spannbares Befestigungselement zwischen den beiden Stützprofilen angeordnet ist und das dazwischen angeordnete Flächenvolumenelement in die zugeordnete Aufnahme des jeweiligen Stützprofils gedrückt gehalten wird. Durch das Spannen dieses Befestigungselementes kann dann das Flächenvolumenelement an den beiden Stützprofilen fixiert werden.

In einer weiteren vorteilhaften Ausgestaltung des ersten Aspekts umfasst das jeweilige Flächenvolumenelement eine erste und eine zweite flexible Deckschicht mit einer dazwischen angeordneten Zwischenstruktur. Die Zwischenstruktur ist derart ausgebildet, dass die erste und zweite Deckschicht in einem aufgeblasenen und/oder evakuierten Zustand in Flächenerstreckung vorgegeben beabstandet zueinander sind.

Der Aufbau des jeweiligen Flächenvolumenelementes mit der ersten und zweiten Deckschicht und der dazwischen angeordneten Zwischenstruktur ermöglicht im aufgeblasenen und/oder evakuierten Zustand ein biegesteifes und formstabiles Element. Um einen aufblasbaren und/oder evakuierbaren Raum in der Zwischenstruktur zwischen der ersten und zweiten Deckschicht zu ermöglichen, sind die Kanten beispielsweise mittels einer Abschlusslasche versiegelt. Diese Abschlusslasche verläuft dabei vorzugsweise im Bereich der jeweiligen Kante zwischen der ersten und zweiten Deckschicht und ist an dieser jeweils fluiddicht befestigt, so z.B. verklebt und/oder vernäht, etc. Die Abschlusslasche ist vorzugsweise aus dem gleichen Material und kann den gleichen Aufbau aufweisen als die erste oder zweite Deckschicht.

Vorzugsweise ist die jeweilige Deckschicht aus einem Kunststoffmaterial, so z.B. PVC, Polycotton oder Nylon gebildet. In dem aufgeblasenen und/oder evakuierten Zustand umfasst die jeweilige Deckschicht keine sichtbaren Wölbungen und/oder großflächige Vertiefungen, weist also eine im Wesentlichen glatte, kontinuierlich verlaufende Oberfläche auf. Vorzugsweise ist die Zwischenstruktur ausgebildet, die erste und die zweite Deckschicht derart mechanisch zu koppeln, dass in einem aufgeblasenen und/oder evakuierten Zustand die erste Deckschicht zu der zweiten Deckschicht über die Erstreckung der Zwischenstruktur vorgegeben beabstandet ist. Dabei kann der Abstand über die Erstreckung der Zwischenstruktur konstant sein. Wesentlich ist hier, dass dieser vorgegebene Abstand zwischen der ersten und zweiten Deckschicht auch bei einer Belastung des Flächenvolumenelementes im Wesentlichen unverändert bleibt.

Die Zwischenschicht erstreckt sich im Wesentlichen über die gesamte Erstreckung des jeweiligen Flächenvolumenelementes. Damit kann mittels der Zwischenstruktur gewährleistet werden, dass der vorgegebene Abstand zwischen der ersten und zweiten Deckschicht in einem weiten Über- und/oder Unterdruckbereich über die Erstreckung des jeweiligen Flächenvolumenelementes eingehalten werden kann. Gleichzeitig geht damit eine hohe Druckfestigkeit und Biegesteifigkeit des jeweiligen Flächenvolumenelementes einher. Dadurch kann das jeweilige Flächenvolumenelement auch besonders stark belastet werden.

"Aufblasbar" bedeutet in diesem Zusammenhang, dass das jeweilige Flächenvolumenelement mit einem Gas, so z.B. Luft, befüllbar und somit zumindest teilweise mit einem Überdruck beaufschlagbar ist, um seinen Nutzungszustand einzunehmen. "Evakuierbar" bedeutet dagegen, dass das jeweilige Flächenvolumenelement zumindest teilweise mit einem Unterdruck beaufschlagbar ist, um seinen Nutzungszustand einzunehmen.

Der Zwischenstruktur des jeweiligen Flächenvolumenelementes können mehrere fluidisch getrennte Kammern zugeordnet sein. Jede Kammer kann dabei separat entweder aufblasbar oder evakuierbar sein. Dazu kann jeder Kammer zumindest ein Ventil zugeordnet sein. Die Zwischenstruktur kann ferner zumindest eine erste Kammer, die mit einem Überdruck beaufschlagbar ist, und zumindest eine zweite Kammer, die mit einem Granulat gefüllt und mit einem Unterdruck beaufschlagbar ist, umfassen. Dabei ist die erste Kammer von der zweiten Kammer fluidisch getrennt. Beispielsweise umfasst die Zwischenstruktur des jeweiligen Flächenvolumenelementes mehrere erste Kammern und mehrere zweite Kammern. Die Kammerwände der mehreren Kammern repräsentieren dabei die mechanische Kopplung zwischen der ersten und zweiten Deckschicht. Die zumindest eine zweite Kammer ist vorzugsweise mit einem Granulat gefüllt. Dadurch wird in einem evakuierten Zustand der zumindest einen zweiten Kammer eine hohe Reibung zwischen den Granulatpartikeln erreicht, woraus eine hohe Steifigkeit insbesondere Drucksteifigkeit und Biegesteifigkeit dieser zumindest einen zweiten Kammer resultiert. In diesem Fall repräsentiert das Granulat in der zumindest einen zweiten Kammer im evakuierten Zustand zusätzlich die mechanische Kopplung zwischen der ersten und zweiten Deckschicht. Das Granulat in der zumindest einen zweiten Kammer kann beispielsweise als Kunststoff- oder Biogranulat ausgebildet sein. Besonders vorteilhaft ist eine Ausgestaltung, in der zumindest eine zweite Kammer über die Längserstreckung des jeweiligen Flächenvolumenelementes verläuft. Die zumindest eine erste und die zumindest eine zweite Kammer und die zugeordneten Kammerwände repräsentieren dabei die mechanische Kopplung zwischen der ersten und zweiten Deckschicht. In dieser Ausgestaltung ist die Zwischenstruktur vorzugsweise ausgebildet, die erste und die zweite Deckschicht derart mechanisch zu koppeln, dass im aufgeblasenen und evakuierten Zustand die erste und zweite Deckschicht über die Erstreckung der Zwischenstruktur im Wesentlichen parallel verlaufen.

Alternativ kann die Zwischenstruktur des jeweiligen Flächenvolumenelementes derart ausgebildet sein, dass zwischen der ersten Deckschicht und der zweiten Deckschicht eine Vielzahl gleichlanger Stabilisierungsfäden verlaufen. Eine solche Ausführung entspricht einer sogenannten Drop-Stitch Struktur mit einer Vielzahl von Stabilisierungsfäden zwischen der ersten und zweiten Deckschicht. Auch bietet ein solcher Aufbau des jeweiligen Flächenvolumenelementes eine besonders hohe Formstabilität und weist gleichzeitig eine hohe Reißfestigkeit auf. Vorzugsweise wird das jeweilige Flächenvolumenelement mit einer Drop-Stitch Struktur mit einem Überdruck beaufschlagt. Dabei kann mittels der Drop-Stitch Struktur auch bei einem sehr hohen Überdruck die vorgegebene Form des Flächenvolumenelementes beibehalten werden. Dabei können der Zwischenstruktur ein oder mehrere Kammern zugeordnet sein. Sofern der Zwischenstruktur mehrere Kammern zugeordnet und diese jeweils als Drop-Stitch Struktur ausgeführt sind, kann durch die Beaufschlagung der Kammern mit unterschiedlich vorgegebener Überdrücke das Flächenvolumenelement an seine gewünschte Verwendung angepasst werden. Vorzugsweise kann das jeweilige Flächenvolumenelement oder einzelne Kammern mit der Drop-Stitch Struktur jeweils auf einen Überdruckbereich zwischen 0,3 und 2 Bar aufgeblasen werden.

Die Stabilisierungsfäden bilden die mechanische Kopplung zwischen der ersten und zweiten Deckschicht. Die Länge der Stabilisierungsfäden gibt dabei im Wesentlich die Dicke des jeweiligen Flächenvolumenelementes über seine Erstreckung vor. Die Dicke des jeweiligen Flächenvolumenelementes kann eine Dicke von beispielsweise 10 cm, 15 cm, 20cm, etc. aufweisen. In dieser Ausgestaltung ist die Zwischenstruktur vorzugsweise ausgebildet, die erste und die zweite Deckschicht derart mechanisch zu koppeln, dass im aufgeblasenen Zustand die erste und zweite Deckschicht über die Erstreckung der Zwischenstruktur im Wesentlichen parallel verlaufen.

Auch kann das jeweilige Flächenvolumenelement ein oder mehrere Stabilisierungselemente vorgegebener Länge und Breite umfassen. Diese können auf oder in der ersten oder zweiten Deckschicht angeordnet und in Längs- und/oder Querrichtung verlaufen und dabei ausgebildet sein, im Nutzungszustand des jeweiligen Flächenvolumenelementes eine lokale Steifigkeit zu bewirken. Das zumindest eine Stabilisierungselement ist beispielsweise flexibel ausgebildet und weist ein hohes Elastizitätsmodul und eine hohe Zugfestigkeit auf und bewirkt damit eine zusätzliche Steifigkeit des jeweiligen Flächenvolumenelementes. Beispielsweise ist das Stabilisierungselement als ein Faserband oder Faserstreifen ausgebildet, das bzw. der Fasern umfasst, die in Faserrichtung ein hohes Elastizitätsmodul aufweisen und besonders zugfest sind. Die Breite des Faserbandes oder Faserstreifens kann beispielsweise zwischen einigen Millimetern bis zu einigen Zentimetern liegen und sich in Quer- und/oder Längsrichtung erstrecken. Alternativ kann das Stabilisierungselement auch großflächig als Faserlage ausgebildet sein und auf oder in zumindest einer der Deckschichten angeordnet sein. Beispielsweise kann das Faserband, der Faserstreifen oder die Faserlage synthetische Fasern wie z.B. Aramid-, Polyethylen-, CFK/ GFK-Fasern, oder Naturfasern, wie z.B. Baumwoll- oder Hanffasern, umfassen. Wird beispielsweise das jeweilige Flächenvolumenelement auf einer Seite belastet, so kann das Stabilisierungselement auf der der Belastung gegenüberliegenden Seite des Flächenvolumenelementes auf oder in der zugeordneten Deckschicht angeordnet bzw. integriert sein. Dadurch wirkt das Stabilisierungselement der Belastung aufgrund des hohen Elastizitätsmoduls und der Zugfestigkeit entgegen. Eine aus der Belastung resultierende Durchbiegung des Flächenvolumenelementes kann dadurch reduziert werden. Das Stabilisierungselement kann beispielsweise auf oder in der zugeordneten Deckschicht verklebt sein. Natürlich kann auch zumindest ein Stabiliserungselement auf oder in der ersten Deckschicht und zumindest ein weiteres Stabiliserungselement auf oder in der zweiten Deckschicht angeordnet bzw. integriert sein.

Grundsätzlich wäre es auch möglich, ein Flächenvolumenelement mit einer Zwischenstruktur bereitzustellen, die zumindest eine erste und zumindest eine zweite Kammer umfasst, wobei die jeweilige erste Kammer eine Drop-Stitch Struktur aufweist und aufblasbar ausgebildet ist und die jeweilige zweite Kammer mit Granulat gefüllt ist und evakuierbar ausgebildet ist.

Beispielsweise kann ein Raum bereitgestellt werden, der durch zumindest eine Anordnung nach dem ersten Aspekt gebildet ist. Durch die Anordnung kann der Raum sehr flexibel aufgebaut werden und auch später noch an geänderte Anforderungen angepasst werden. Ferner erlaubt die Verwendung der Flächenvolumenelemente eine besonders leichte und gewichtsoptimierte und gleichzeitig stabile Ausführung des Raumes. Somit lässt sich ein solcher Raum auch gut als mobiler Wohnraum, so z.B. Tiny-House, verwenden. Gleichzeitig erlaubt die Verwendung der aufblasbaren und/oder evakuierbaren Flächenvolumenelemente eine gute thermische und akustische Isolierung. Wird der Raum nicht benötigt, können das oder die Flächenvolumenelemente in einem erschlafften Zustand einfach und platzsparend verpackt, so z.B. gerollt, werden. Auch die Stützprofile lassen sich aufgrund ihrer länglichen aber ansonsten schlanken Ausführung gut verstauen.

Der Bereich zwischen der Seite des jeweiligen Flächenvolumenelementes und der Aufnahme des jeweiligen Stützprofils kann ferner auch derart ausgebildet sein oder derart genutzt werden, dass hier Installationen wie beispielsweise die Verlegung von elektrischen oder andersartigen Leitungen oder Rohren angeordnet werden können. Auch in anderen Hohlräumen des jeweiligen Stützprofiles können entsprechende Installation verlegt werden.

Die Erfindung zeichnet sich gemäß einem zweiten Aspekt aus durch ein Fahrzeug mit zumindest einer Anordnung nach dem ersten Aspekt. Aufgrund der gewichtsreduzierten Ausführung mit zumindest einem Flächenvolumenelement ist die Anordnung besonders gut und effizient für die Verwendung als Box, so z.B. Stau-, Anbaubox, Frachtcontainer, oder als Wohnkabine für ein Fahrzeug geeignet. Dabei kann das Fahrzeug als Landfahrzeug so z.B. LKW, als Wohnmobil, Anhänger oder Wohnanhänger ausgebildet sein.

Grundsätzlich sind alle Merkmale der Anordnung und deren Bestandteile auch auf die entsprechend ausgebildete Box, Kiste oder Wohnkabine des Fahrzeugs anwendbar.

Besonders vorteilhaft ist die Anordnung dann, wenn ein zumindest teilweise als Decke bzw. Dach ausgebildetes Flächenvolumenelement schwenkbar oder verschiebbar an dem oder den Stützprofilen befestigt ist, so z.B. ähnlich eines Klapp- oder Hubdaches oder eines Schiebedaches. Unter dem Begriff schiebbar ist dann nicht nur eine seitliche Verschiebung, sondern auch die Ausführung abgedeckt, bei der das als Decke bzw. Dach ausgebildete Flächenvolumenelement nach oben hin verschiebbar ist. Das bedeutet, dass sich das Flächenvolumenelement derart nach oben hin verschieben lässt, dass die Höhe in diesem Bereich des Raumes vergrößert wird. Für diese jeweilige Schwenk- bzw. Verschiebefunktion können Mittel vorhanden sein, die das als Decke bzw. Dach ausgebildete Flächenvolumenelement in der jeweiligen geschwenkten bzw. verschobenen Position halten, so z.B. an dem jeweiligen Stützprofil befestigte Scharniere oder schwenkbare Klappen oder aufblasbare Stützen oder aufblasbare Seitenwände. Im nichtgeschwenkten bzw. nichtverschobenen Zustand können Verriegelungselemente vorhanden sein, die ein unbeabsichtigtes Öffnen oder Verschieben des als Decke bzw. Dache ausgebildeten Flächenvolumenelementes verhindern so z.B. an dem jeweiligen Stützprofil befestigte Kompressions- oder Spannverschlüsse, die in entsprechende Mittel an dem jeweiligen Flächenvolumenelement greifen, so z.B. in D-Ringe, die an dem Flächenvolumenelement befestigt sind.

Wenn das als Fahrzeugdecke ausgebildete Flächenvolumenelement dann auch noch mit zumindest einem Stabilisierungselement vorgegebener Länge und Breite ausgebildet ist, welches auf oder in der zugeordneten ersten oder zweiten Deckschicht des jeweiligen Flächenvolumenelementes angeordnet bzw. integriert ist und in Längs- und/oder Querrichtung verläuft, so kann diese Decke bzw. das Dach noch stärker belastet werden, so z.B. zum Transportieren von sehr schwerem Gepäck oder Fracht, etc. bzw. kann auch betreten werden durch ein oder mehrere Personen. Natürlich können auch mehrere Flächenvolumenelemente diese Fahrzeugdecke bilden.

Die Erfindung zeichnet sich gemäß einem dritten Aspekt aus durch ein Verfahren zum Herstellen einer Anordnung nach dem ersten Aspekt. Bei dem Verfahren wird ein Stützprofil bereitgestellt. Danach wird das Flächenvolumenelement aufgeblasen und dann das aufgeblasene Flächenvolumenelement in die zugeordnete Aufnahme des Stützprofiles gesteckt. Das Einstecken des Flächenvolumenelementes in die zugeordnete Aufnahme kann werkzeuglos erfolgen.

In einer vorteilhaften Ausgestaltung des dritten Aspekts wird das Flächenvolumenelement auf einen ersten vorgegebenen Druck aufgeblasen. Danach wird das aufgeblasene Flächenvolumenelement in die zugeordnete Aufnahme des Stützprofiles gesteckt. Nach dem Ineinanderstecken wird das Flächenvolumenelement auf einen zweiten vorgegebenen Druck aufgeblasen. Der zweite Druck ist dabei größer als der erste Druck.

In einer weiteren vorteilhaften Ausgestaltung des dritten Aspekts wird nach dem Ineinanderstecken des aufgeblasenen Flächenvolumenelementes in die zugeordnete Aufnahme des Stützprofils das aufgeblasene Flächenvolumenelement mittels des spannbaren Befestigungselementes an dem Stützprofil fixiert.

Die Fixierung mittels des spannbaren Befestigungselementes kann dabei auch dann erfolgen, wenn das Flächenvolumenelement mit dem ersten Druck beaufschlagt ist. Wird danach das Flächenvolumenelement auf den zweiten Druck aufgeblasen, kann das Befestigungselement noch weiter gespannt werden, so dass eine feste und zuverlässige Fixierung ermöglicht wird.

Weitere Vorteile und Merkmale der vorliegenden Erfindung ergeben sich aus der folgenden beispielhaften Beschreibung derzeit bevorzugter Ausführungsformen.
- Fig. 1 und 2: Schematische Darstellung eines Flächenvolumenelementes und eines Stützprofils,
- Fig. 3 und 4: Darstellung einer Anordnung,
- Fig. 5: Darstellung eines Stützprofils,
- Fig. 6: Darstellung einer Anordnung mit zwei Flächenvolumenelementen,
- Fig. 7 und 8: Darstellung einer Anordnung mit zwei Stützprofilen,
- Fig. 9 und 10: Darstellung eines Raumes,
- Fig. 11a, 11b: Fahrzeug,
- Fig. 12: Verfahrensablauf.

In den Figuren werden gleiche Bezugszeichen für gleiche oder zumindest ähnliche Elemente, Komponenten oder Aspekte verwendet. Es wird darauf hingewiesen, dass die nachfolgend beschriebenen Ausführungsformen lediglich eine beschränkte Auswahl an möglichen Ausführungsvarianten der Erfindung darstellen. Insbesondere ist es möglich, die Merkmale einzelner Ausführungsformen in geeigneter Weise miteinander zu kombinieren, so dass für den Fachmann mit den hier explizit dargestellten Ausführungsvarianten eine Vielzahl von verschiedenen Ausführungsformen als offensichtlich offenbart anzusehen sind.

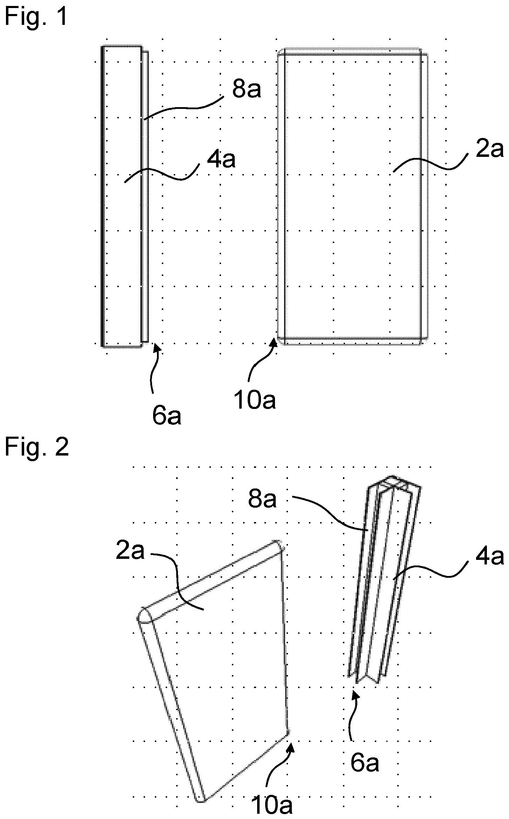

Ein erstes Flächenvolumenelement 2a und ein erstes Stützprofil 4a ist in Fig. 1 in einer Seitenansicht und in Fig. 2 in einer perspektivischen Ansicht dargestellt. Das erste Flächenvolumenelement 2a weist in der Seitenansicht (Fig. 1) eine rechteckige Form auf mit einer vorgegebenen Länge (oder Höhe) und Breite und einer vorgegebenen Dicke, wobei die Dicke kleiner ist als die Länge und Breite. Das erste Flächenvolumenelement 2a ist in einem aufgeblasenen und/oder evakuierten Zustand, d.h. in einem Nutzungszustand, dargestellt.

Das erste Stützprofil 4a ist als längliches Element ausgebildet und weist damit eine Länge (oder Höhe) auf, die größer ist als dessen Breite und dessen Tiefe. Auf zumindest einer ersten Seite 6a des Stützprofils 4a weist dieses eine erste Aufnahme 8a auf. Das jeweilige Stützprofil ist beispielsweise als Aluminiumprofil und dadurch besonders leicht ausgebildet. Auch kann das Stützprofil aus Holzelementen ausgebildet sein und kann damit besonders einfach aufgebaut sein. Aber auch andere Ausbildungen des Stützprofils sind grundsätzlich denkbar.

Das erste Flächenvolumenelement 2a weist eine erste Seite 10a auf. Die erste Seite 10a des Flächenvolumenelementes 2a ist in Fig. 1 und 2 der ersten Aufnahme 8a des ersten Stützprofils 4a zugewandt.

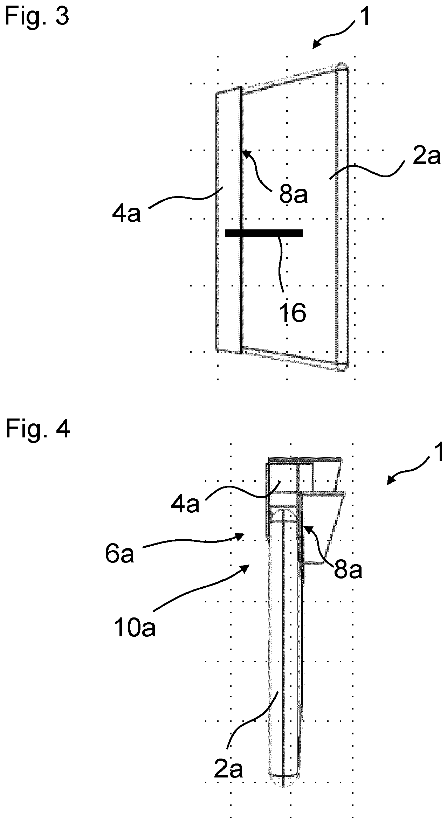

In Fig. 3 und 4 ist eine Anordnung 1 dargestellt, die aus dem ersten Flächenvolumenelement 2a und dem ersten Stützprofil 4a gebildet ist. In Fig. 3 ist die Anordnung in einer Schrägansicht und in Fig. 4 in einer Draufsicht dargestellt. Insbesondere in Fig. 4 ist gut erkennbar, wie die erste Seite 10a des ersten Flächenvolumenelementes 2a in die erste Aufnahme 8a des ersten Stützprofils 4a gesteckt ist. Die erste Aufnahme 8a umgibt die erste Seite 10a des Flächenvolumenelementes 2a zumindest teilweise. D.h. die Aufnahme 8a ist derart geformt, dass zumindest ein Teil der ersten Seite 10a des Flächenvolumenelementes 2a aufgenommen werden kann und zwar derart, dass das Flächenvolumenelement 2a mittels des Stützprofils 4a gestützt wird. Beispielsweise kann eine Breite der ersten Aufnahme 8a im Wesentlichen einer Dicke des ersten Flächenvolumenelementes 2a entsprechen. Das Ineinanderstecken der ersten Seite 10a des ersten Flächenvolumenelementes 2a in die erste Aufnahme 8a des ersten Stützprofils 4a kann vorzugsweise werkzeuglos erfolgen. Damit die beiden Elemente sicher miteinander gekoppelt sind und bleiben, kann eine Fixierung mittels zumindest eines spannbaren Befestigungselementes 16 erfolgen (siehe Fig. 3), welches beispielsweise als Gurt, Kette, Seil, Hakenschraube etc. ausgebildet ist. Aber auch andere Befestigungselemente sind grundsätzlich anwendbar.

Das erste wie auch jedes im Weiteren erwähnte Flächenvolumenelement weist eine erste und eine zweite Deckschicht sowie eine dazwischen angeordnete Zwischenstruktur auf (nicht dargestellt). An den Seitenkanten des Flächenvolumenelementes kann jeweils eine Abschlusslasche verlaufen (nicht dargestellt). Diese verbindet an der jeweiligen Kante die erste Deckschicht mit der zweiten Deckschicht und ist mit der jeweiligen Deckschicht jeweils fluiddicht verbunden, so z.B. verklebt, vernäht oder verschweißt. An den Ecken oder im Bereich der Ecken des Flächenvolumenelementes sind die Abschlusslaschen miteinander fluiddicht verbunden. Alternativ kann die Abschlusslasche als Endlosmaterial ausgebildet sein und entlang aller Kanten mit der ersten und zweiten Deckschicht verbunden sein. Mittels der Abschlusslasche und der ersten und zweiten Deckschicht kann somit im Flächenvolumenelement ein fluiddichter Raum geschaffen werden, der mit einem Überdruck und/oder Unterdruck beaufschlagbar ist. Diesem fluiddichten Raum ist die Zwischenstruktur des Flächenvolumenelementes zugeordnet.

Die erste und zweite Deckschicht ist flexible ausgebildet und weist jeweils zumindest eine Materialschicht auf. Alternativ kann die jeweilige Deckschicht auch mehreren Schichten umfassen. So kann die jeweilige Materialschicht der Deckschicht beispielsweise aus einem Kunststoffmaterial hergestellt sein, so z.B. aus PVC, Nylon, etc. Die Abschlusslasche kann aus demselben Material wie die erste oder zweite Deckschicht hergestellt sein. Die jeweilige Abschlusslasche kann sich aber in der Oberflächentextur und -beschaffenheit von der ersten und zweiten Deckschicht unterscheiden.

Die Zwischenstruktur kann beispielsweise eine Vielzahl von Stabilisierungsfäden aufweisen, die die erste Deckschicht mit der zweiten Deckschicht mechanisch koppeln. Vorzugsweise sind die Stabilisierungsfäden in der ersten und zweiten Deckschicht mit ihren jeweiligen Enden vernäht oder verklebt. Die Stabilisierungsfäden sind beispielsweise aus Nylon hergestellt. In dieser Ausführung mit Stabilisierungsfäden entspricht der Aufbau der Zwischenstruktur einer sogenannten Drop-Stitch Struktur, die in der Regel ihre Festigkeit erlangt, wenn der fluiddichte Raum der Zwischenstruktur mit einem Gas gefüllt, so z.B. Luft, und mit einem ausreichenden Überdruck beaufschlagt ist.

Vorzugsweise weisen die Stabilisierungsfäden gleiche Längen auf und geben dadurch maßgeblich den Abstand zwischen der ersten und zweiten Deckschicht und somit die Dicke des Flächenvolumenelementes in Dickenrichtung und somit die Wandstärke vor. So kann das Flächenvolumenelement beispielsweise eine Dicke von etwa 10 cm, 15 cm, 20 cm, etc. aufweisen. Die Stabilisierungsfäden verlaufen typischerweise im aufgeblasenen Zustand auf kürzesten Weg zwischen der ersten und zweiten Deckschicht, d.h. weisen einen relativ zu den Deckschichten senkrechten Verlauf aus. Alternativ oder zusätzlich können die Stabilisierungsfäden im aufgeblasenen Zustand aber auch einen relativ zu den Deckschichten anderen Winkel einnehmen, so z.B. einen X-förmigen Verlauf zwischen der ersten und zweiten Deckschicht.

Ist die Zwischenstruktur des Flächenvolumenelementes als Drop-Stitch Struktur ausgebildet, sind die erste und die zweite Deckschicht typischerweise derart mechanisch gekoppelt, dass im aufgeblasenen Zustand, d.h. im Nutzungszustand, die erste und zweite Deckschicht über die Erstreckung der Zwischenstruktur im Wesentlichen parallel verlaufen.

Der Zwischenstruktur können mehrere Kammern zugeordnet sein, die jeweils fluidisch getrennt voneinander ausgebildet sind. Dabei ist jeder Kammer ein Ventil zugeordnet über welches die Kammer entweder mit einem Überdruck oder Unterdruck beaufschlagbar ist. Diese Kammern mit den jeweiligen Kammerwandungen bilden dabei zumindest teilweise eine mechanische Kopplung zwischen der ersten und zweiten Deckschicht. Die jeweilige Kammer der Zwischenstruktur kann dabei als Drop-Stitch Struktur ausgebildet sein und eine Vielzahl von Stabilisierungsfäden zwischen der ersten und zweiten Deckschicht aufweisen. Damit kann die jeweilige Drop-Stitch Kammer mit einem zugeordneten Überdruck beaufschlagt werden.

Alternativ können der Zwischenstruktur auch mehrere fluidisch getrennte Kammern zugeordnet sein, von denen einige mit einem Granulat gefüllt sind. Die mit einem Granulat gefüllten Kammern können dann mit einem Unterdruck beaufschlagt werden. Als Granulat kann ein Material verwendet werden, welches in einem evakuierten Zustand eine hohe Reibung zwischen den Granulatpartikeln bewirkt und somit einen sehr steifen und stabilen Nutzungszustand einnimmt. Weitere Anforderungen an ein solches Granulat können ferner ein geringes Gewicht, Isolationseigenschaften, geringe Kosten, Verfügbarkeit, Umweltverträglichkeit etc. sein. Beispielsweise kann ein Kunststoff- oder Biogranulat oder andere Materialien verwendet werden.

Die nicht mit einem Granulat gefüllten Kammern werden dagegen vorzugsweise mit einem Überdruck beaufschlagt. Durch die Kombination von mit Granulat und einem Unterdruck beaufschlagbaren Kammern mit Kammern, die mit einem Überdruck beaufschlagbar sind, kann eine hohe Steifigkeit, insbesondere Druck- und Biegesteifigkeit, der Zwischenstruktur und somit des Flächenvolumenelementes erreicht werden. Vorzugsweise sind die evakuierbaren und mit Granulat gefüllten Kammern in der Nähe der Deckschichten und die aufblasbaren Kammern im Inneren des Flächenvolumenelementes angeordnet.

Ist die Zwischenstruktur aus der Kombination von mit Granulat und einem Unterdruck beaufschlagbaren Kammern mit Kammern, die mit einem Überdruck beaufschlagbar sind, ausgebildet, ist die erste und die zweite Deckschicht vorzugsweise derart mechanisch gekoppelt, dass im aufgeblasenen und evakuierten Zustand, d.h. im Nutzungszustand, die erste und die zweite Deckschicht über die Erstreckung der Zwischenstruktur im Wesentlichen parallel verlaufen.

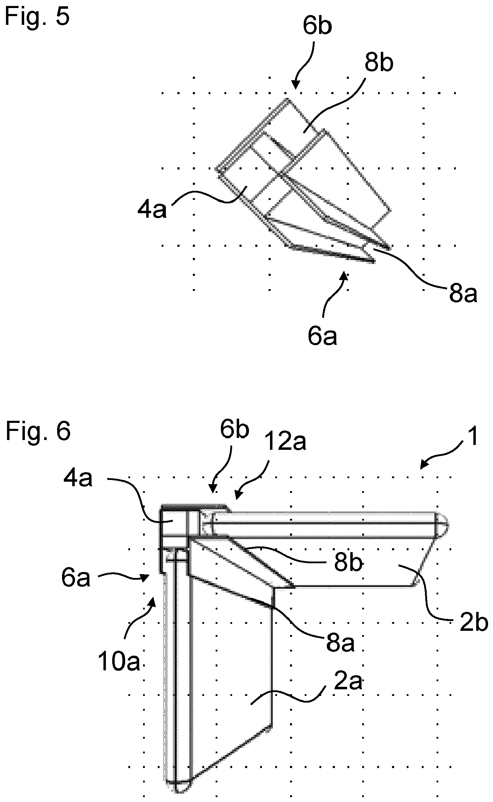

In Fig. 5 ist ein Stützprofil 4a in einer Draufsicht dargestellt. Dieses weist neben der ersten Seite 6a mit der ersten Aufnahme 8a auch eine zweite Seite 6b mit einer zweiten Aufnahme 8b auf. Entsprechend der Fig. 6 kann das Stützprofil 4a mittels der ersten Aufnahme 8a eine erste Seite 10a des ersten Flächenvolumenelementes 2a und mittels der zweiten Aufnahme 8b eine erste Seite 12a eines zweiten Flächenvolumenelementes 2b aufnehmen und dadurch stützen. Die beiden Aufnahmen 8a, 8b des Stützprofils 4a sind in der Draufsicht in einem rechten Winkel zueinander angeordnet und schließen damit einen Winkel von 90° ein. Das Stützprofil 4a bildet somit ein Eckprofil. Grundsätzlich sind aber auch Stützprofile denkbar, deren Aufnahmen andere Winkel einschließen. Auch kann das Stützprofil grundsätzlich mehr als zwei Aufnahmen umfassen. Beide Flächenvolumenelemente 2a, 2b können jeweils zusätzlich mit dem Stützprofil 4a mittels eines spannbaren Befestigungselementes fixiert sein (nicht dargestellt).

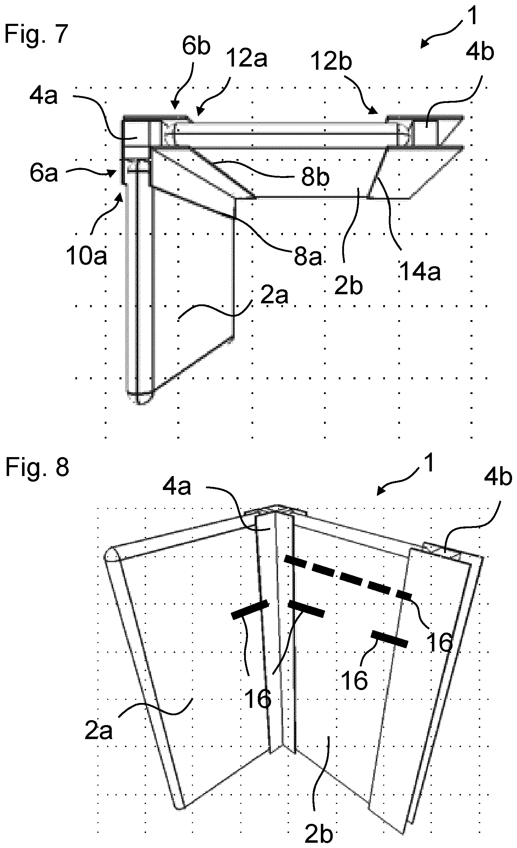

In Fig. 7 und Fig. 8 ist ein weiteres Ausführungsbeispiel einer Anordnung 1 gezeigt, welches neben dem ersten Stützprofil 4a noch ein zweites Stützprofil 4b umfasst. Dabei stützt das erste Stützprofil 4a mittels dessen zugeordneter Aufnahme 8b die erste Seite 12a und das zweite Stützprofil 4b mittels dessen zugeordneter Aufnahme 14a eine zweite Seite 12b des zweiten Flächenvolumenelementes 2b. Auch hier kann jedes Flächenvolumenelement 2a, 2b mit dem oder den zugeordneten Stützprofilen 4a, 4b mittels eines oder mehreren spannbaren Befestigungselementen 16 fixiert sein (siehe Fig. 8). Alternativ oder zusätzlich kann das zumindest eine spannbare Befestigungsmittel 16 auch über mehrere Stützprofile gespannt sein, um das oder die diesen Stützprofilen zugeordneten Flächenvolumenelemente zu fixieren. In Fig. 8 ist das spannbare Befestigungsmittel 16 beispielhaft zwischen den Stützprofilen 4a, 4b gespannt (siehe gestrichelte Darstellung des spannbaren Befestigungsmittels), um das zweite Flächenvolumenelement 2b zu fixieren.

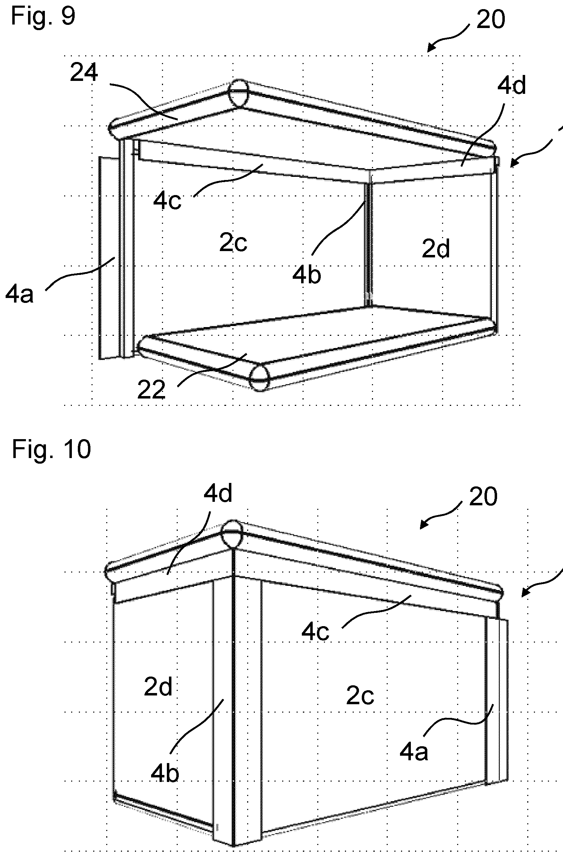

In Fig. 9 und 10 ist ein Raum 20 gezeigt, der aus einer Anordnung 1 mit mehreren Flächenvolumenelementen 2c, 2d, 22, 24 gebildet ist. So weist die Anordnung 1 ein als jeweilige Seitenwand ausgebildetes erstes und zweites Flächenvolumenelement 2c, 2d auf. Ein weiteres Flächenvolumenelement 24 ist als Decke und ein anderes Flächenvolumenelement 22 als Boden ausgebildet. Das als Boden bzw. Decke ausgebildete Flächenvolumenelement 22, 24 kann dabei eine größere Dicke aufweisen als die als Seitenwände ausgebildeten Flächenvolumenelementes 2c, 2d. Alternativ oder zusätzlich können die als Boden bzw. Decke ausgebildeten Flächenvolumenelemente 22, 24 jeweils ein oder mehrere Stabilisierungselemente in oder auf der zugeordneten ersten und/oder zweiten Deckschicht aufweisen.

Die beiden als Seitenwände ausgebildeten Flächenvolumenelemente 2c, 2d sind durch ein senkrecht angeordnetes Stützprofil 4b miteinander gekoppelt. Das als Decke ausgebildete Flächenvolumenelement 24 ist mittels horizontal verlaufender Stützprofile 4c, 4d mit den als Seitenwände ausgebildeten Flächenvolumenelementen 2c, 2d gekoppelt. Auch das als Boden ausgebildete Flächenvolumenelement 22 kann mittels horizontal verlaufender Stützprofile (nicht dargestellt) mit den als Seitenwände ausgebildeten Flächenvolumenelemente 2c, 2d gekoppelt sein. Grundsätzlich kann das als Boden ausgebildete Flächenvolumenelement 22 aber auch mit den als Seitenwänden ausgebildeten Flächenvolumenelementen 2c, 2d und/oder dem senkrecht angeordneten Stützprofilen direkt gekoppelt sein, so z.B. mittels Klebung. In einer anderen Ausführung können die als Seitenwände ausgebildeten Flächenvolumenelemente 2c, 2d aber auch direkt auf dem als Boden ausgebildeten Flächenvolumenelement 22 lagern.

Um den Raum 20 zu vergrößern, können an die Decken-, Seitenwand- und Boden-Flächenvolumenelemente 2c, 2d, 22, 24 weitere horizontal und vertikal angeordnete Stützprofile angeordnet werden, um weitere Flächenvolumenelemente zu koppeln. Als Beispiel ist in Fig. 9 ein entsprechendes Erweiterungs-Stützprofil 4a dargestellt, welches nur mit dem Flächenvolumenelement 2c gekoppelt ist, aber grundsätzlich die Möglichkeit bietet ein weiteres Flächenvolumenelement aufzunehmen und zu stützen.

Der in Fig. 9 und 10 dargestellte Raum 20 ist offen ausgebildet. Grundsätzlich kann der Raum durch die Verwendung weiterer als Seitenwände ausgebildeten Flächenvolumenelemente auch als weniger offen oder geschlossen ausgebildet sein.

Die Stützprofile können neben der senkrechten oder waagerechten Ausrichtung auch diagonal oder schräg angeordnet werden. Dazu korrespondierend können die passenden Flächenvolumenelemente eine diagonal oder schräg verlaufende Seite aufweisen.

Natürlich können die Flächenvolumenelemente alle oder nur eine Teilmenge davon Öffnungen für Fenster, Decken- bzw. Dachfenster, Türen oder sonstigen Funktionen aufweisen (in den Figuren nicht dargestellt).

Das als Boden ausgebildete Flächenvolumenelement kann eine größere Fläche aufweisen als eine Grundfläche des durch die Anordnung überdeckten Raumes. So kann das als Boden ausgebildete Flächenvolumenelement beispielsweise auch zumindest teilweise einen Boden einer Terrasse bilden. In einem anderen Ausführungsbeispiel kann das als Boden ausgebildete Flächenvolumenelement auch derart in seinem Volumen ausgebildet sein, das es mit der damit oder darauf errichteten Anordnung schwimmt, so z.B. in Form eines Hausbootes.

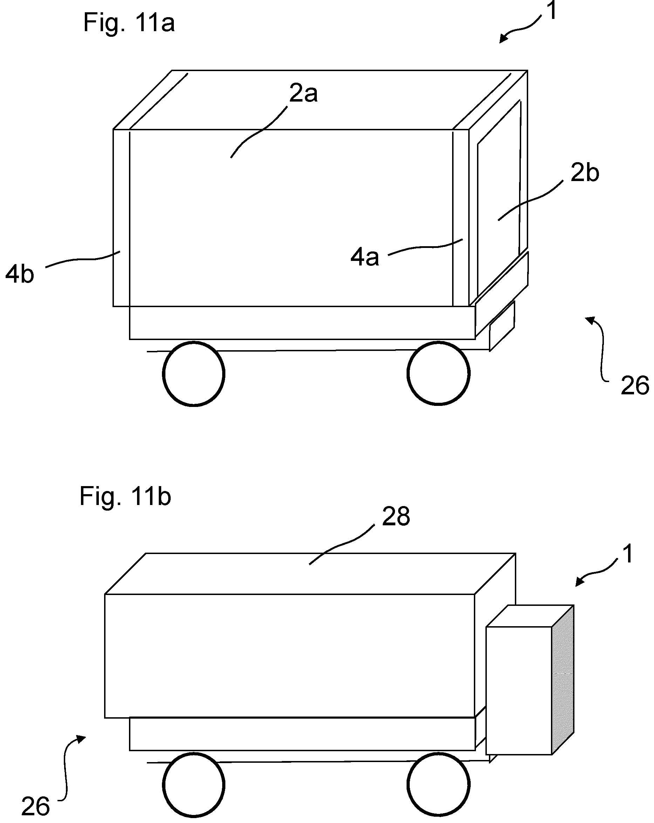

Fig. 11a und 11b zeigen jeweils ein Fahrzeug 26 mit einer Anordnung 1, die lediglich schematisch und nur angedeutet dargestellt ist. In Fig. 11a ist die Anordnung 1 beispielsweise als Frachtraum, -container oder Wohnraum ausgebildet, der zumindest aus den beiden Flächenvolumenelementen 2a, 2b und den Stützprofilen 4a, 4b gebildet ist. In Fig. 11b ist die Anordnung 1 beispielsweise als eine Box oder Kiste ausgeführt, die an einen bestehenden Fahrzeugaufbau 28 befestigt ist. Auch diese Box oder Kiste besteht aus zumindest einem Flächenvolumenelement und zumindest einem Stützprofil (wobei beides in Fig. 11b nicht weiter benannt und nicht im Einzelnen dargestellt ist). Grundsätzlich kann diese als Box oder Kiste ausgeführte Anordnung 1 auch an anderer Stelle des Fahrzeugs 26 verbaut sein, so z.B. als Staubox oder Werkzeugkiste an einem Fahrzeugrahmen bzw. unterhalb des Fahrzeugsaufbaus 28. Sowohl in dem Ausführungsbeispiel nach Fig. 11a als auch 11b können die Flächenvolumenelemente mittels spannbarer Befestigungselemente mit den Stützprofilen fixiert sein. Auch kann die Anordnung 1 mittels spannbarer Befestigungsmittel direkt mit dem Fahrzeug gekoppelt sein, die sich vorzugsweise auch werkzeuglos betätigen lassen.

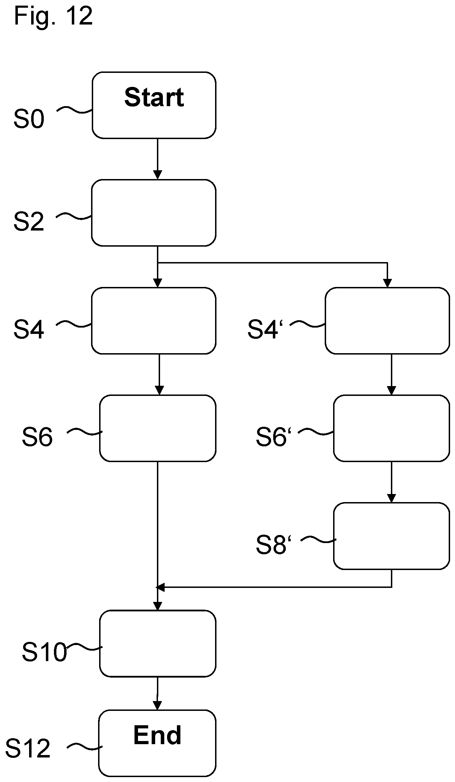

In Fig. 12 ist ein Verfahren zum Herstellen einer Anordnung 1 dargestellt, welches in einem Schritt S0 gestartet wird. In einem Schritt S2 wird ein Stützprofil bereitgestellt.

In einem Schritt S4 wird ein Flächenvolumenelement aufgeblasen. Weist das Flächenvolumenelement eine Drop-Stitch Struktur als Zwischenstruktur auf, wird das Flächenvolumenelement in dem Schritt S4 aufgeblasen. Ist dagegen das Flächenvolumenelement mit zumindest einer ersten und einer mit Granulat gefüllten zweiten Kammer ausgebildet, so wird in dem Schritt S4 zumindest die zumindest eine Kammer aufgeblasen, die mit einem Überdruck beaufschlagbar ist. Grundsätzlich kann der Schritt S4 auch vor dem Schritt S2 ausgeführt werden.

In einem Schritt S6 wird das aufgeblasene Flächenvolumenelement in die zugeordnete Aufnahme des Stützprofils werkzeuglos eingesteckt.

In einem optionalen Schritt S10 kann das aufgeblasene Flächenvolumenelement mittels zumindest eines spannbaren Befestigungselementes mit dem Stützprofil fixiert werden.

In einem Schritt S12 wird das Herstellungsverfahren beendet. Alternativ kann das Verfahren erneut mit dem Schritt S2 ausgeführt werden, um weitere Flächenvolumenelemente und Stützprofile miteinander zu verbinden, abhängig davon wie viele solcher Elemente der herzustellenden Anordnung zugeordnet sind.

In einem alternativen Herstellungsverfahren wird in einem Schritt S4' das Flächenvolumenelement auf einen ersten vorgegebenen Druck aufgeblasen. Beispielsweise kann das Flächenvolumenelement auf einem Druck von 0,5 Bar aufgeblasen werden. Vorzugsweise sollte der erste Druck so vorgegeben sein, dass sich das Flächenvolumenelement im Bereich seiner ersten Seite noch relativ leicht eindrücken lässt.

In einem Schritt S6' wird das aufgeblasene Flächenvolumenelement in die zugeordnete Aufnahme des Stützprofils werkzeuglos eingesteckt. Aufgrund des geringen ersten Drucks, sollte das Einstecken in die Aufnahme des Stützprofils relativ einfach möglich sein.

Optional kann hier nun auch der Schritt S10 ausgeführt werden und das auf den ersten Druck aufgeblasene Flächenvolumenelement mittels zumindest eines spannbaren Befestigungselementes mit dem Stützprofil fixiert werden.

In einem Schritt S8' wird das Flächenvolumenelement auf einen zweiten vorgegebenen Druck aufgeblasen, wobei der zweite Druck größer vorgegeben ist als der erste Druck. So kann das Flächenvolumenelement beispielsweise auf seinen Nenndruck aufgeblasen werden. Durch das Aufblasen auf den zweiten vorgegebenen Druck, spannt sich das Flächenvolumenelement mit seiner zugeordneten Seite in die Aufnahme des Stützprofils. Dabei kann es auch vorteilshaft sein, wenn die Weite der Aufnahme des Stützprofiles minimal kleiner ist als eine Dicke des Flächenvolumenelementes im aufgeblasenen Zustand. Dadurch kann die Spannkraft zwischen Flächenvolumenelement und Stützprofil noch weiter erhöht und dadurch eine sichere Stützung ermöglicht werden. Sofern der Schritt S10 auch bereits ausgeführt wurde, kann durch das Aufblasen auf den zweiten Druck das Befestigungselement noch stärker gespannt werden. Alternativ kann der optionale Schritt 10 auch nach dem Schritt 8' ausgeführt werden.

### Bezugszeichenliste

- 1: Anordnung
- 2a, 2b, 2c, 2d: Flächenvolumenelement
- 4a, 4b, 4c, 4d: Stützprofil
- 6a, 6b: Seite des Stützprofils
- 8a, 8b, 14a: Aufnahme des Stützprofils
- 10a, 12a, 12b: Seite des Flächenvolumenelementes
- 16: spannbares Befestigungselement
- 20: Raum
- 22: Boden
- 24: Decke
- 26: Fahrzeug mit Anordnung
- 28: Fahrzeugaufbau und Anordnung

## Patentansprüche

1. Anordnung (1) mit einem ersten aufblasbaren und/oder evakuierbaren Flächenvolumenelement (2a) und einem ersten länglichen Stützprofil (4a), welches an einer ersten Seite (6a) eine erste Aufnahme (8a) umfasst, wobei das erste aufblasbare und/oder evakuierbare Flächenvolumenelement (2a) derart mit dem ersten Stützprofil (4a) gekoppelt ist, dass die erste Aufnahme (8a) eine erste Seite (10a) des ersten Flächenvolumenelementes (2a) außenumfangsseitig zumindest teilweise umgibt.

2. Anordnung (1) nach Anspruch 1, der ein zweites aufblasbares und/oder evakuierbares Flächenvolumenelement (2b) umfasst, wobei das erste Stützprofil (4a) an einer zweiten Seite (6b) eine zweite Aufnahme (8b) umfasst und das zweite aufblasbare und/oder evakuierbares Flächenvolumenelement (2b) derart mit dem ersten Stützprofil (4a) gekoppelt ist, dass die zweite Aufnahme (8b) eine erste Seite (12a) des zweiten Flächenvolumenelementes (2b) außenumfangsseitig zumindest teilweise umgibt.

3. Anordnung (1) nach Anspruch 1 oder 2, mit einem zweiten länglichen Stützprofil (4b), wobei das erste Stützprofil (4a) mit der ersten Seite (12a) des ersten oder zweiten Flächenvolumenelementes (2b) und das zweite Stützprofil (4b) mit einer zweiten Seite (12b) des ersten oder zweiten Flächenvolumenelementes (2b) gekoppelt ist.

4. Anordnung (1) nach einem der vorstehenden Ansprüche, bei dem das jeweilige Flächenvolumenelement (2a, 2b) mit der entsprechenden Seite (10a, 12a, 12b) in die entsprechende Aufnahme (8a, 8b, 14a) des Stützprofils (4a, 4b) werkzeuglos gesteckt ist.

5. Anordnung (1) nach einem der vorstehenden Ansprüche, bei dem eine Fixierung des oder der Flächenvolumenelemente (2a, 2b) an das zumindest eine Stützprofil (4a, 4b) mittels eines spannbaren Befestigungselementes (16) erfolgt.

6. Anordnung (1) nach einem der vorstehenden Ansprüche, bei dem das jeweilige Flächenvolumenelement (2a, 2b) eine erste und eine zweite flexible Deckschicht mit einer dazwischen angeordneten Zwischenstruktur umfasst, wobei die Zwischenstruktur derart ausgebildet ist, dass die erste und zweite Deckschicht in einem aufgeblasenen und/oder evakuierten Zustand in Flächenerstreckung vorgegeben beabstandet zueinander sind.

7. Anordnung (1) nach einem der vorstehenden Ansprüche, bei dem das jeweilige Flächenvolumenelement (2a, 2b) zumindest ein Stabilisierungselement vorgegebener Länge und Breite aufweist, das auf oder in der ersten oder zweiten zugeordneten Deckschicht angeordnet bzw. integriert ist und in Längs- und/oder Querrichtung verläuft.

8. Fahrzeug (26) mit zumindest einer Anordnung (1) nach einem der Ansprüche 1 bis 7.

9. Fahrzeug (26) nach Anspruch 8, bei dem die Anordnung (1) als eine Box oder eine Kiste ausgebildet ist.

10. Fahrzeug (26) nach Anspruch 8 oder 9, bei dem die Anordnung (1) als eine Wohnkabine ausgebildet ist.

11. Verfahren zum Herstellen einer Anordnung (1) nach einem der Ansprüche 1 bis 7, bei dem
- ein Stützprofil (4a, 4b) bereitgestellt wird,
- ein Flächenvolumenelement (2a, 2b) aufgeblasen wird,
- das aufgeblasene Flächenvolumenelement (2a, 2b) in die zugeordnete Aufnahme (8a, 8b, 14a) des Stützprofiles (4a, 4b) gesteckt wird.

12. Verfahren nach Anspruch 11, bei dem
- das Flächenvolumenelement (2a, 2b) auf einen ersten vorgegebenen Druck aufgeblasen wird,
- das aufgeblasene Flächenvolumenelement (2a, 2b) in die zugeordnete Aufnahme (8a, 8b, 14a) des Stützprofiles (4a, 4b) gesteckt wird,
- danach das Flächenvolumenelement (2a, 2b) auf einen zweiten vorgegebenen Druck aufgeblasen wird, wobei der zweite Druck größer ist als der erste Druck.

13. Verfahren nach Anspruch 11 oder 12, bei dem
- nach dem Ineinanderstecken des aufgeblasenen Flächenvolumenelementes (2a, 2b) in die zugeordnete Aufnahme (8a, 8b, 14a) des Stützprofils (4a, 4b) das aufgeblasene Flächenvolumenelement (2a, 2b) mittels eines spannbaren Befestigungselementes (16) an dem Stützprofil (4a, 4b) fixiert wird.
